# FASCICULE DE BREVET EUROPEEN

(11) **EP 1 752 528 B1**
(45) Date de publication et mention de la délivrance du brevet: **19.11.2008**
(21) Numéro de dépôt: 06117940.4
(22) Date de dépôt: 27.07.2006
(51) Int. Cl.: C12C 13/02

(54) **Procédé et dispositif de chauffage de produit de brasserie**
Verfahren und Vorrichtung zum Erhitzen von Brauereiprodukten
Process and apparatus for heating of brewery products

(30) Priorité: 28.07.2005 BE 200500375
(43) Date de publication de la demande: 14.02.2007
(73) Titulaire: MEURA, 7600 Péruwelz (BE)
(72) Inventeur: Thirot, Michel, 7332, Sirault (BE); De Brackeleire, Christian, 1933, Sterrebeek (BE)
(74) Mandataire: Claeys, Pierre

(56) Documents cités:
- DE-U1- 29 618 725
- GB-A- 1 321 009
- ANONYMOUS: "AflosJET" INTERNET ARTICLE, [Online] 9 mars 2005 (2005-03-09), XP002370394 Extrait de l'Internet: URL:http://web.archive.org/web/20050309095 000/http://www.meura.be/html/aflosjet.html > [extrait le 2006-03-02]
- ALVAREZ E ET AL: "Injection of steam into the mashing process as alternative method for the temperature control and low-cost of production." JOURNAL OF FOOD ENGINEERING, vol. 43, no. 4, 2000, page 193-196, XP002370395

## Description

La présente invention est relative à un procédé de chauffage de produit de brasserie, comprenant
- une injection de vapeur d'eau directement à l'intérieur du produit de brasserie à traiter, au travers d'au moins une perforation d'au moins un dispositif d'injection, et
- un arrêt de ladite injection lorsque le produit de brasserie a atteint une température prédéterminée.

L'invention concerne en particulier le chauffage, comme produit de brasserie à chauffer, d'une maische, de façon à atteindre différents paliers de travail des enzymes, d'un moût de brasserie, afin d'atteindre l'ébullition, d'extraits de malt, de produits de distillerie, etc.

Actuellement, le chauffage de ces produits se fait dans des cuves munies d'un agitateur et d'une enveloppe externe dans laquelle circule de la vapeur d'eau. Pour ce type de chauffage, une agitation du produit de brasserie est critique, car elle doit assurer l'homogénéité et augmenter le transfert de chaleur depuis la vapeur d'eau. Cependant, cette technologie (voir par exemple BE-376066) présente plusieurs inconvénients. La forte agitation requise a pour effet une abrasion des particules du produit et une oxydation de celui-ci qui conduit à la formation d'un gel, ce qui entraîne des difficultés lors de la filtration ultérieure. La paroi de la cuve au niveau de l'enveloppe externe est sujette à un encrassement à chaque fonctionnement, ce qui a pour effet une réduction rapide du coefficient de transfert thermique. Il en résulte que la cuve doit être fréquemment nettoyée (après 15 brassages), ce qui diminue le rendement de l'installation. Il en résulte aussi une hétérogénéité du produit obtenu, en fonction de l'état d'encrassement des parois, puisque le transfert thermique n'est pas constant en fonction du temps.

Pour porter remède à ces problèmes, on a déjà prévu un procédé de chauffage de produit de brasserie tel qu'indiqué au début. La demanderesse met sur le marché, sous la dénomination commerciale de AflosJet, un dispositif permettant de mettre en oeuvre un tel procédé de chauffage par injection de vapeur propre directement dans le produit. Pour ce faire on fait appel à des injecteurs en forme de tuyères. II est apparu toutefois que ce type d'appareillage occasionne encore des forces de cisaillement importantes qui peuvent compromettre la filtration ultérieure et que l'encrassement des tuyères donne lieu finalement à une obstruction plus ou moins rapide de celles-ci.

La présente invention a pour but de mettre au point un procédé et un dispositif de chauffage de produit de brasserie qui permettent d'éviter les inconvénients précités.

On a résolu ces problèmes par un procédé tel qu'indiqué au début, qui comprend en outre, avant ou simultanément à l'arrêt de l'injection, une obturation de ladite au moins une perforation.

Par l'obturation de la ou des perforations de chaque dispositif d'injection, avant ou pendant l'arrêt de l'injection, il n'existe plus, dans ou derrière le dispositif d'injection, aucun volume rempli de vapeur qui soit en communication directe avec le contenu de la cuve. La vapeur, qui est enfermée dans le dispositif d'injection, ne peut plus, en se condensant, provoquer un vide dans lequel pourrait venir s'engouffrer le produit de brasserie à traiter, ce qui garantit la propreté des dispositifs d'injection. Etant donné que la vapeur située à l'intérieur des dispositifs d'injection n'est plus refroidie par contact avec le produit à chauffer lors de l'arrêt de l'alimentation en vapeur, il en résulte aussi une réduction drastique du phénomène de condensation à l'intérieur du dispositif d'injection et donc une diminution des vibrations et du bruit assourdissant occasionnés par ces phénomènes de condensation.

Pour obtenir une homogénéisation la plus intense possible, l'injection a lieu au travers de plusieurs dispositifs d'injection pourvus chacun de plusieurs perforations. On peut ainsi éventuellement se passer d'un agitateur dans la cuve ou le faire fonctionner à une vitesse modérée au point que son mouvement ne donne plus lieu aux phénomènes d'abrasion des particules du produit à chauffer.

Suivant un mode de réalisation avantageux de l'invention, après l'arrêt susdit de ladite injection de vapeur d'eau, le procédé peut comprendre, à au moins une reprise, les étapes suivantes :
un maintien du produit de brasserie chauffé à un palier de température correspondant sensiblement à ladite température prédéterminée pendant une période de temps, puis
une ouverture de ladite au moins une perforation de chaque dispositif d'injection,
une injection supplémentaire de vapeur d'eau,
un arrêt de l'injection supplémentaire à une température plus élevée que ladite température prédéterminée, avec obturation préalable ou simultanée de ladite au moins une perforation.
On peut ainsi traiter de manière adéquate des maisches qui doivent atteindre successivement des paliers de température de plus en plus élevés pour favoriser le travail de différentes enzymes.

La vapeur d'eau injectée a été bien entendu préalablement épurée, par exemple en ayant fait subir à l'eau un adoucissement sur des résines échangeuses d'ions, une osmose inverse, puis une désaération et un chauffage de façon à obtenir une vapeur d'eau à basse pression de l'ordre de 0,2 à 4 bar, de préférence de 0,2 à 2 bar.

La présente invention a également pour objet une installation de chauffage de produit de brasserie, comprenant
- une cuve contenant le produit de brasserie à chauffer,
- au moins une source de vapeur d'eau située à l'extérieur de la cuve,
- au moins un dispositif d'injection alimenté en vapeur d'eau par ladite au moins une source de vapeur d'eau et pourvu d'au moins une perforation à travers laquelle la vapeur d'eau alimentée au dispositif d'injection est injectée directement dans le produit de brasserie à chauffer, et
- au moins une vanne d'arrêt qui, en position d'ouverture, autorise un passage de vapeur d'eau d'au moins une source de vapeur d'eau à au moins un dispositif d'injection et qui, en position de fermeture, arrête ce passage.

Suivant l'invention, chaque dispositif d'injection comprend en outre
- au moins un obturateur qui, en position de libération, libère au moins une perforation et qui, en position d'obturation, obture celle-ci,
ladite au moins une vanne d'arrêt passant en position de fermeture après ou simultanément au passage de l'obturateur en position d'obturation, et
ladite au moins une vanne d'arrêt passant en position d'ouverture avant ou simultanément au passage de l'obturateur en position de libération.

D'autres formes de réalisation d'une installation suivant l'invention sont indiquées dans les revendications annexées.

D'autres détails et particularités de l'invention ressortiront de la description donnée ci-après à titre non limitatif et avec référence aux dessins annexés.

La figure 1 représente une vue en perspective partiellement brisée d'une plaque perforée à mettre en oeuvre dans une installation suivant l'invention.

La figure 2 représente une vue en coupe axiale d'une partie d'une cuve d'une installation suivant l'invention.

Les figures 3 et 4 représentent des vues en coupe axiale d'un dispositif d'injection d'une installation suivant l'invention, dans deux positions différentes de l'obturateur.

Sur les différentes figures, les éléments identiques ou analogues portent les mêmes références.

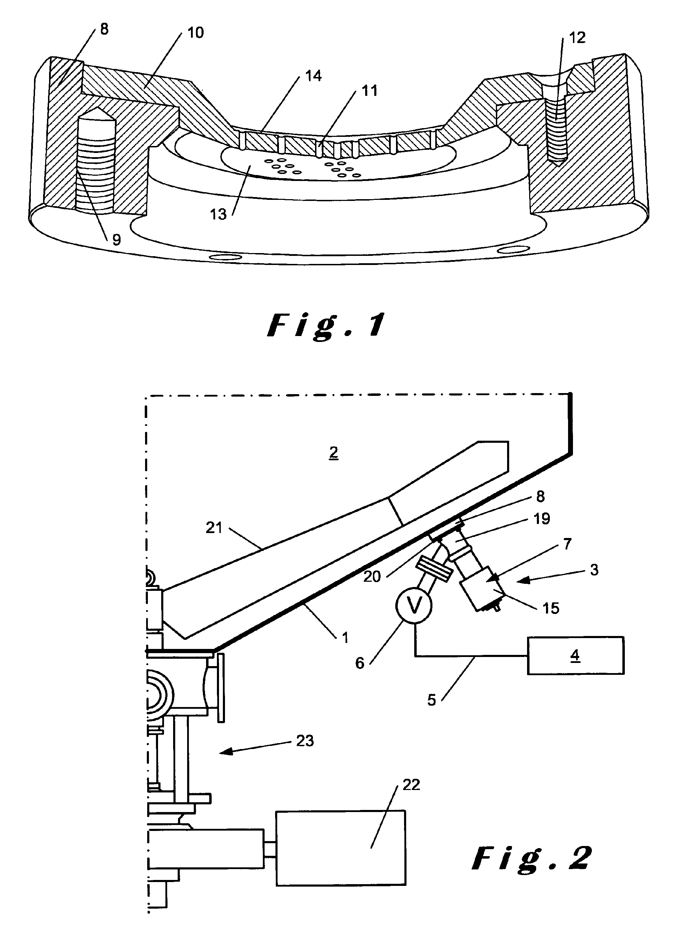

Ainsi qu'il ressort en particulier de la figure 2, l'installation de chauffage de produit de brasserie suivant l'invention comprend une cuve 1 contenant ce produit 2. Cette cuve est munie de plusieurs dispositifs d'injection de vapeur d'eau 3, dont un seul est représenté. Chaque dispositif d'injection est alimenté en vapeur d'eau, par l'intermédiaire d'un conduit d'alimentation 15, depuis une source de vapeur d'eau, sous la forme par exemple d'un générateur 4 représenté de manière schématique. Ce générateur 4 est de préférence un générateur de vapeur propre, à basse pression, tel que mis sur le marché par la demanderesse sous la dénomination commerciale d'AflosJet. Le conduit d'alimentation 5 est muni d'un organe d'arrêt, par exemple d'une vanne 6 représentée de manière schématique. Cette vanne d'arrêt 6 en position d'ouverture autorise un passage de vapeur d'eau dans le conduit d'alimentation 5 et elle ferme ce passage en position de fermeture.

Dans l'installation illustrée, les dispositifs d'injection 3 sont agencés de manière à déboucher dans la partie inférieure ou moyenne de la cuve, de façon à injecter la vapeur d'eau directement dans le produit de brasserie à chauffer. De cette manière la vapeur d'eau transfère la chaleur résultant de sa condensation au produit de brasserie à chauffer, sans nécessiter un échange thermique au travers d'une paroi métallique. Cette technologie permet aussi d'éviter un encrassement des parois du fond de cuve par des dépôts caramélisés, comme dans les techniques usuelles.

Le dispositif d'injection 3 comprend, dans l'exemple illustré, dans sa partie arrière, un vérin hydraulique 7 ou pneumatique ou encore un solénoïde qui est fixé à l'extérieur de la cuve 1 par l'intermédiaire d'une bride 8 à laquelle, dans l'exemple illustré, il est boulonné en 9. Dans l'exemple illustré, une plaque perforée 10 pourvue de plusieurs perforations 11 est fixée également à cette bride 8, du côté opposé au vérin 7, par exemple par boulonnage en 12. Cette plaque perforée 10 recouvre la totalité de l'espace interne libre de la bride 8. La bride 8 munie de sa plaque perforée 10 est fixée à la paroi de la cuve 1 en face d'un trou correspondant prévu dans celle-ci. La plaque perforée présente donc une première face 13 côté alimentation en vapeur d'eau et une deuxième face 14 qui entre en contact avec le produit de brasserie à chauffer.

Le vérin hydraulique 7 comporte un cylindre 15 dans lequel se déplace un piston 16. L'extrémité libre de ce piston 16 est pourvue, dans l'exemple illustré, d'un obturateur sous la forme d'une plaque pleine 18. Le piston est protégé de l'extérieur par un tube 19, sur une bride 20 duquel est fixée la bride 8 précitée qui maintient en position la plaque perforée 10. C'est dans la cavité du tube 19 que débouche le conduit d'alimentation en vapeur d'eau 5.

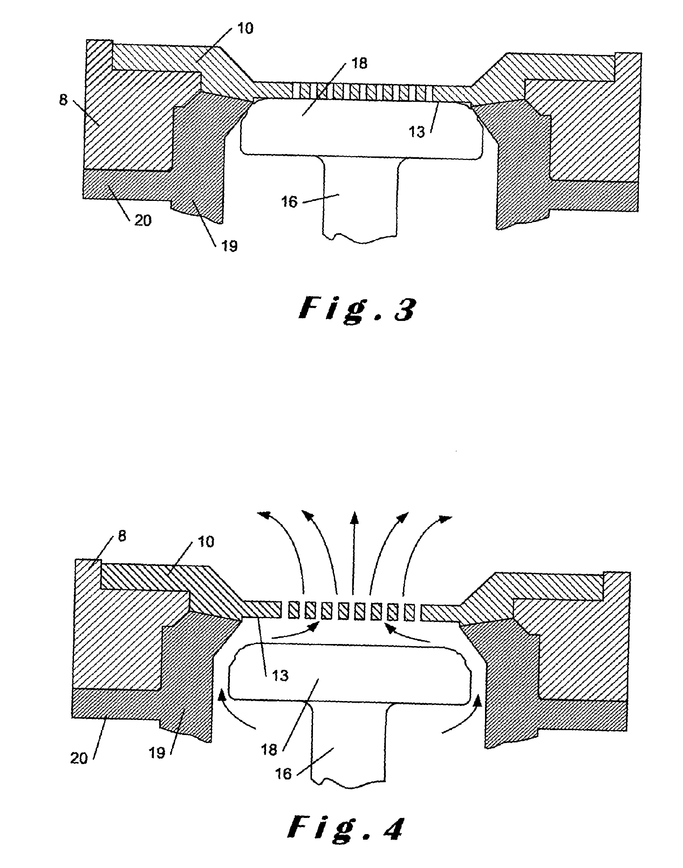

Dans la position illustrée sur la figure 4, le piston 16 est en position de retrait dans le cylindre 15 et la plaque pleine 18 est dans sa position dite de libération. Etant donné que la plaque pleine 18 présente un diamètre inférieur au diamètre interne du tube 19, la vapeur provenant du conduit d'alimentation 5 se propage dans le tube 19, sous basse pression, elle contourne la plaque pleine 18 et passe à travers les perforations 11 de la plaque perforée 10, libérées de la plaque pleine, en pénétrant directement dans le produit de brasserie à chauffer.

Dans la position illustrée sur la figure 3, le piston 16 est en position d'extension dans le cylindre 15 et la plaque pleine 18 est dans une position dite d'obturation. Tout en prenant appui sur le siège formé par l'extrémité rétrécie du tube 19, la plaque pleine 18 couvre la face 13 de la plaque perforée 10 et obture les perforations 11. Dans cette position, la vapeur d'eau ne peut plus entrer en contact avec le produit de brasserie à chauffer. Simultanément ou après cette obturation, la vanne d'arrêt 6 est amenée en position de fermeture. Donc, en cas de condensation de la vapeur d'eau présente dans le tube 19, celle-ci provoque un vide dans cet espace. Toutefois, comme celui-ci n'est plus en communication avec l'intérieur de la cuve, il ne peut y avoir aspiration du produit de brasserie à l'intérieur du dispositif d'injection 3. Il en résulte que celui-ci reste propre, sans risque d'être obstrué.

L'injection de la vapeur par diffusion de celle-ci à basse pression au travers de plusieurs orifices favorise aussi la distribution de la vapeur et réduit les sollicitations mécaniques des particules du produit à chauffer. On utilise avantageusement des plaques perforées présentant un diamètre de 15 à 150 mm, de préférence de 25 à 80 mm. Avantageusement les perforations présentent chacune un diamètre de 1 à 6 mm, de préférence de 2 à 4 mm. Les perforations d'une plaque perforée présentent en particulier une surface de trou inférieure à 30 % de la surface totale de la plaque perforée, de préférence inférieure à 15 % de celle-ci.

Il doit être entendu que la présente invention n'est en aucune façon limitée à la forme de réalisation décrite ci-dessus et que bien des modifications peuvent y être apportées sans sortir du cadre des revendications annexées.

On peut par exemple prévoir que la cuve soit munie en outre d'un agitateur 21, qui est entraîné en rotation douce par un moteur 22, par l'intermédiaire d'une transmission 23.

On peut aussi imaginer que l'obturateur forme simultanément la vanne d'arrêt.

On peut aussi concevoir que la plaque pleine soit déplaçable non perpendiculairement à la plaque perforée, mais parallèlement à celle-ci, à la manière d'un tiroir. De plus il n'est pas impossible de penser à une solution où l'obturateur se trouve à l'intérieur de la cuve et couvre donc, en position d'obturation, la face de la plaque perforée qui est en contact avec le produit à chauffer.

Suivant une variante de réalisation de l'invention, le dispositif d'injection comporte, comme paroi perforée, non une plaque perforée mais bien un cylindre perforé qui peut faire saillie à l'intérieur de la cuve. Dans ce cas l'obturateur sera plutôt un cylindre non perforé qui couvre, en position d'obturation, les perforations du cylindre perforé.

Enfin, les perforations peuvent être en nombres variables sur la paroi perforée, et présenter divers modèles d'agencements, avec des diamètres identiques ou variables sur une même paroi perforée.

## Revendications

1. Procédé de chauffage de produit de brasserie, comprenant
- une injection de vapeur d'eau directement à l'intérieur du produit de brasserie à traiter, au travers d'au moins une perforation d'au moins un dispositif d'injection, et
- un arrêt de ladite injection lorsque le produit de brasserie a atteint une température prédéterminée,
**caractérisé en ce qu'**il comprend en outre
avant ou simultanément à l'arrêt de l'injection, une obturation de ladite au moins une perforation.

2. Procédé suivant la revendication 1, **caractérisé en ce que** l'injection a lieu au travers de plusieurs dispositifs d'injection pourvus chacun de plusieurs perforations.

3. Procédé suivant l'une des revendications 1 et 2, **caractérisé en ce que,** après l'arrêt susdit de ladite injection de vapeur d'eau, le procédé peut comprendre, à au moins une reprise, les étapes suivantes :
un maintien du produit de brasserie chauffé à un palier de température correspondant sensiblement à ladite température prédéterminée pendant une période de temps, puis
une ouverture de ladite au moins une perforation de chaque dispositif d'injection,
une injection supplémentaire de vapeur d'eau,
un arrêt de l'injection supplémentaire à une température plus élevée que ladite température prédéterminée, avec obturation préalable ou simultanée de ladite au moins une perforation.

4. Procédé suivant l'une quelconque des revendications 1 à 3, **caractérisé en ce que** le produit de brasserie est une maische, un moût, un extrait de malt ou un liquide à distiller.

5. Procédé suivant l'une quelconque des revendications 1 à 4, **caractérisé en ce que** la vapeur d'eau injectée présente une pression de 0,2 à 4 bar.

6. Installation de chauffage de produit de brasserie, comprenant
- une cuve (1) contenant le produit de brasserie à chauffer (2),
- au moins une source de vapeur d'eau (4) située à l'extérieur de la cuve,
- au moins un dispositif d'injection (3) alimenté en vapeur d'eau par ladite au moins une source de vapeur d'eau et pourvu d'au moins une perforation à travers laquelle la vapeur d'eau alimentée au dispositif d'injection (11) est injectée directement dans le produit de brasserie à chauffer, et
- au moins un organe d'arrêt (6) qui, en position d'ouverture, autorise un passage de vapeur d'eau d'au moins une source de vapeur d'eau à au moins un dispositif d'injection et qui, en position de fermeture, arrête ce passage,
**caractérisé en ce que** chaque dispositif d'injection (3) comprend en outre
- au moins un obturateur (18) qui, en position de libération, libère au moins une perforation (11) et qui, en position d'obturation, obture celle-ci,
ledit au moins un organe d'arrêt (6) passant en position de fermeture après ou simultanément au passage de l'obturateur (18) en position d'obturation, et
ledit au moins un organe d'arrêt (6) passant en position d'ouverture avant ou simultanément au passage de l'obturateur (18) en position de libération.

7. Installation suivant la revendication 6, **caractérisée en ce que** chaque dispositif d'injection (3) comprend une paroi (10) perforée de plusieurs perforations (11) et présentant une première face (13) côté alimentation en vapeur d'eau et une deuxième face (14) en contact avec le produit de brasserie à chauffer.

8. Installation suivant l'une des revendications 6 et 7, **caractérisée en ce qu'**elle comprend des moyens de déplacement (7, 15, 16) de chaque obturateur (18) entre ses positions de libération et d'obturation.

9. Installation suivant l'une des revendications 7 et 8, **caractérisée en ce que** la paroi perforée est une plaque perforée (10) fixée à une paroi de la cuve (1), et **en ce que** l'obturateur est une plaque pleine (18) qui, en position d'obturation, couvre une desdites faces de la plaque perforée.

10. Installation suivant l'une des revendications 7 et 8, **caractérisée en ce que** la paroi perforée est un cylindre perforé agencé au travers d'une paroi de la cuve, et **en ce que** l'obturateur est un cylindre non perforé qui, en position d'obturation, couvre une desdites faces du cylindre perforé.

11. Installation suivant la revendication 9, **caractérisée en ce que** chaque plaque perforée (10) présente un diamètre de l'ordre de 15 à 150 mm et **en ce que** les perforations (11) de chaque plaque perforée présentent chacune un diamètre de l'ordre de 1 à 6 mm.

12. Installation suivant l'une des revendications 9 et 11, **caractérisée en ce que** chaque face de plaque perforée (10) présente une surface totale et **en ce que** les perforations (11) d'une plaque perforée présentent une surface de trou inférieure à 30 % de ladite surface totale.

13. Installation suivant l'une des revendications 6 à 12, **caractérisée en ce que** la cuve (1) comprend en outre un agitateur (21).

14. Installation suivant l'une quelconque des revendications 6 à 13, **caractérisée en ce que** ledit au moins un obturateur forme simultanément ledit au moins un organe d'arrêt.

## Claims

1. Method of heating a brewing product, comprising
- an injection of steam directly inside the brewing product to be treated, through at least one perforation of at least one injection device, and
- a stoppage of the said injection when the brewing product has reached a predetermined temperature,
**characterised in that** it also comprises
before or simultaneously with the stoppage of the injection, a closure of the said at least one perforation.

2. Method according to claim 1, **characterised in that** the injection takes place through several injection devices each provided with several perforations.

3. Method according to one of claims 1 and 2, **characterised in that,** after the aforementioned stoppage of the said steam injection, the method can comprise, at least once, the following steps:
keeping the brewing product heated at a temperature level corresponding substantially to the said predetermined temperature for a period of time, then
opening the said at least one perforation of each injection device,
a supplementary injection of steam,
stoppage of the supplementary injection at a higher temperature than the said predetermined temperature, with the prior or simultaneous closure of the said at least one perforation.

4. Method according to any one of claims 1 to 3, **characterised in that** the brewing product is a mash, a wort, an extract of malt or a liquid to be distilled.

5. Method according to any one of claims 1 to 4, **characterised in that** the steam injected has a pressure of 0.2 to 4 bar.

6. Installation for heating a brewing product, comprising
- a vessel (1) containing the brewing product to be heated (2),
- at least one steam source (4) situated outside the vessel,
- at least one injection device (3) supplied with steam by the said at least one steam source and provided with at least one perforation through which the steam supplied to the injection device (11) is injected directly into the brewing product to be heated, and
- at least one stop member (6) that, in the open position, allows passage of steam from at least one steam source to at least one injection device and that, in the closed position, stops this passage,
**characterised in that** each injection device (3) also comprises
- at least one obturator (18) that, in the release position, releases at least one perforation (11) and that, in the obturation position, closes it off,
the said at least one stop member (6) passing into the closure position after or simultaneously with the passage of the obturator (18) into the obturation position, and
the said at least one stop member (6) passing into the open position before or simultaneously with the passage of the obturator (18) into the release position.

7. Installation according to claim 6, **characterised in that** each injection device (3) comprises a wall (10) perforated with several perforations (11) and having a first face (13) on the steam supply side and a second face (14) in contact with the brewing product to be heated.

8. Installation according to one of claims 6 and 7, **characterised in that** it comprises means (7, 15, 16) of moving each obturator (18) between its release and obturation positions.

9. Installation according to one of claims 7 and 8, **characterised in that** the perforated wall is a perforated plate (10) fixed to a wall of the vessel (1) and **in that** the obturator is a solid plate (18) that, in the obturation position, covers one of the said faces of the perforated plate.

10. Installation according to one of claims 7 and 8, **characterised in that** the perforated wall is a perforated cylinder arranged through a wall of the vessel and **in that** the obturator is a non-perforated cylinder that, in the obturation position, covers one of the said faces of the perforated cylinder.

11. Installation according to claim 9, **characterised in that** each perforated plate (10) has a diameter of around 15 to 150 mm and **in that** the perforations (11) in each perforated plate each have a diameter of around 1 to 6 mm.

12. Installation according to one of claims 9 and 11, **characterised in that** each face of a perforated plate (10) has a total surface **in that** the perforations (11) in a perforated plate have a hole surface less than 30% of the said total surface.

13. Installation according to one of claims 6 to 12, **characterised in that** the vessel (1) also comprises an agitator (21).

14. Installation according to any one of claims 6 to 13, **characterised in that** the said at least one obturator simultaneously forms the said at least one stop member.

## Patentansprüche

1. Verfahren zum Erhitzen eines Brauereiprodukts, das Folgendes aufweist
- ein Wasserdampfeinspritzen direkt in das Innere des zu behandelnden Brauereiprodukts durch mindestens eine Perforierung einer Einspritzvorrichtung hindurch und
- ein Stoppen des Einspritzens, wenn das Brauereiprodukt eine vorbestimmte Temperatur erreicht hat,
**dadurch gekennzeichnet, dass** es ferner Folgendes aufweist vor dem Stoppen des Einspritzens oder gleichzeitig damit ein Verschließen der mindestens einen Perforierung.

2. Verfahren nach Anspruch 1, **dadurch gekennzeichnet, dass** das Einspritzen durch mehrere Einspritzvorrichtungen erfolgt, die jeweils mit mehreren Perforierungen versehen sind.

3. Verfahren nach einem der Ansprüche 1 und 2, **dadurch gekennzeichnet, dass** das Verfahren nach dem Stoppen des Wasserdampfeinspritzens mindestens einen der folgenden Schritte aufweisen kann:
ein Halten des erhitzten Brauereiprodukts auf einer Temperaturstufe, die im Wesentlichen der vorbestimmten Temperatur entspricht, während einer bestimmten Zeitspanne, dann
ein Öffnen der mindestens einen Perforierung jeder Einspritzvorrichtung,
ein zusätzliches Einspritzen von Wasserdampf,
ein Stoppen des zusätzlichen Einspritzens bei einer Temperatur, die höher ist als die vorbestimmte Temperatur, mit vorhergehendem oder gleichzeitigem Verschließen der mindestens einen Perforierung.

4. Verfahren nach einem der Ansprüche 1 bis 3, **dadurch gekennzeichnet, dass** das Brauereiprodukt eine Maische, eine Würze, ein Malzextrakt oder eine zu destillierende Flüssigkeit ist.

5. Verfahren nach einem der Ansprüche 1 bis 4, **dadurch gekennzeichnet, dass** der eingespritzte Wasserdampf einen Druck von 0,2 bis 4 bar aufweist.

6. Heizanlage für Brauereiprodukt, die Folgendes aufweist
- einen Bottich (1), der das zu erhitzende Brauereiprodukt (2) enthält,
- mindestens eine Wasserdampfquelle (4), die sich außerhalb des Bottichs befindet,
- mindestens eine Einspritzvorrichtung (3), die von der mindestens einen Wasserdampfquelle mit Wasserdampf gespeist wird und mit mindestens einer Perforierung versehen ist, durch welche der der Einspritzvorrichtung (11) zugeführte Wasserdampf direkt in das zu erhitzende Brauereiprodukt eingespritzt wird, und
- mindestens ein Schließorgan (6), das in Öffnungsstellung ein Durchgehen von Wasserdampf von mindestens einer Wasserdampfquelle zu mindesten einer Einspritzvorrichtung gestattet, und das in Schließstellung dieses Durchgehen stoppt,
**dadurch gekennzeichnet, dass** jede Einspritzvorrichtung (3) ferner Folgendes aufweist
- mindestens einen Verschluss (18), der in Freigabeposition mindestens eine Perforierung (11) freigibt, und der in Schließposition diese Perforierung verschließt,
wobei das mindestens eine Schließorgan (6) nach oder gleichzeitig mit dem Übergehen des Verschlusses (18) auf Schließposition auf Schließposition übergeht, und
wobei das mindestens eine Schließorgan (6) vor oder gleichzeitig mit dem Übergehen des Verschlusses (18) auf Freigabeposition auf Öffnungsposition übergeht.

7. Anlage nach Anspruch 6, **dadurch kennzeichnet, dass** jede Einspritzvorrichtung (3) eine mit mehreren Perforierungen (11) perforierte Wand (10) aufweist und eine erste Seite (13) auf der Versorgungsseite mit Wasserdampf und eine zweite Seite (14) in Berührung mit dem zu erhitzenden Brauereiprodukt aufweist.

8. Anlage nach einem der Ansprüche 6 und 7, **dadurch gekennzeichnet, dass** sie Mittel (7, 15, 16) zum Bewegen jedes Verschlusses (18) zwischen seiner Freigabeposition und seiner Schließposition aufweist.

9. Anlage nach einem der Ansprüche 7 und 8, **dadurch gekennzeichnet, dass** die perforierte Wand eine perforierte Platte (10) ist, die an einer Wand des Bottichs (1) befestigt ist, und dass der Verschluss eine massive Platte (18) ist, die in Schließposition eine der Seiten in der perforierten Platte abdeckt.

10. Anlage nach einem der Ansprüche 7 und 8, **dadurch gekennzeichnet, dass** die perforierte Wand ein perforierter Zylinder ist, der durch eine Wand des Bottichs hindurch eingerichtet ist, und dass der Verschluss ein nicht perforierter Zylinder ist, der in Schließposition eine der Seiten des perforierten Zylinders abdeckt.

11. Anlage nach Anspruch 9, **dadurch gekennzeichnet, dass** jede perforierte Platte (10) einen Durchmesser in der Größenordnung von 15 bis 150 mm aufweist, und dass die Perforierungen (11) jeder perforierten Platte jeweils einen Durchmesser in der Größenordnung von 1 bis 6 mm aufweisen.

12. Anlage nach einem der Ansprüche 9 und 11, **dadurch gekennzeichnet, dass** jede Seite der perforierten Platte (10) eine Gesamtfläche aufweist, und dass die Perforierungen (11) einer perforierten Platte eine Lochfläche aufweisen, die kleiner ist als 30 % der Gesamtfläche.

13. Anlage nach einem der Ansprüche 6 bis 12, **dadurch gekennzeichnet, dass** der Bottich (1) ferner ein Rührwerk (21) aufweist.

14. Anlage nach einem der Ansprüche 6 bis 13, **dadurch gekennzeichnet, dass** der mindestens eine Verschluss gleichzeitig das mindestens eine Schließorgan bildet.
